# FASCICULE DE BREVET EUROPEEN

(11) **EP 0 369 918 B1**
(45) Date de publication et mention de la délivrance du brevet: **12.01.1994**
(21) Numéro de dépôt: 89470020.2
(22) Date de dépôt: 03.11.1989
(51) Int. Cl.: F16K 37/00, G01D 5/20

(54) **Procédé et dispositif pour détecter l'état d'une vanne**
Verfahren und Vorrichtung zum Wahrnehmen des Standes eines Ventils
Process and device for detecting the state of a valve

(30) Priorité: 14.11.1988 FR 8814772
(43) Date de publication de la demande: 23.05.1990
(73) Titulaire: PONT-A-MOUSSON S.A., 54017 Nancy (FR)
(72) Inventeur: Baro, Claude, F-57050 Metz (FR)
(74) Mandataire: Puit, Thierry

(56) Documents cités:
- EP-A- 0 252 184
- DE-A- 3 333 144
- DE-B- 1 116 006
- FR-A- 2 505 443

## Description

La présente invention concerne un procédé et un dispositif permettant de détecter l'état, par exemple état ouvert ou état fermé ou éventuellement un état intermédiaire, d'une vanne qui incorpore, à cette fin, une bobine électrique à noyau mobile déplaçable linéairement en correspondance avec le déplacement de l'organe obturateur de la vanne.

L'invention vise plus particulièrement, bien que non exclusivement, le contrôle de l'état de vannes qui sont situées hors de vue et/ou de toucher d'un opérateur, par exemple au fond d'un regard profond et mal éclairé qui empêche un contrôle visuel, voire un palpage manuel, correct.

On connaît déjà divers dispositifs de détection de l'état, par exemple ouvert ou fermé, d'une vanne faisant appel à une bobine électromagnétique associée à l'organe obturateur de la vanne.

Cependant, ces dispositifs connus font appel en outre à des circuits électriques et/ou électroniques complexes qui, associés à la bobine, fournissent l'indication souhaitée. De tels moyens électriques et/ou électroniques sont coûteux, fragiles et ne peuvent convenir que pour des applications particulières pour lesquelles le problème du coût ne se pose pas et/ou pour lesquelles l'environnement n'est pas susceptible de perturber le fonctionnement de ces moyens électriques et/ou électroniques. En particulier, ces solutions connues ne sont pas envisageables pour le contrôle de l'état des vannes dans les circuits de distribution d'eau propre ou d'évacuation d'eaux usées, vannes qui sont situées au fond de regards où s'accumulent les poussières et débris de toutes sortes et de l'humidité, voire même de l'eau, et qui d'une façon générale doivent être réalisées de la manière la plus économique, la plus robuste et la plus fiable possible.

L'invention a donc essentiellement pour but de proposer des moyens aptes à fournir une information d'état d'une vanne située au fond d'un regard hors de vue et hors de portée de main d'un opérateur, ces moyens devant conduire à une réalisation simple et robuste compatible avec l'environnement défavorable règnant au fond du regard, autonome et ne nécessitant aucune fourniture d'énergie en particulier électrique, fiable, n'exigeant pas d'entretien particulier, et facile d'utilisation.

A ces fins, selon un premier aspect, l'invention propose un procédé selon le préambule de la revendication 1 permettant d'effectuer la détection d'état précitée
et qui est caractérisé en ce que :
- au moment de la détection, on approche de la bobine précitée, sensiblement coaxialement à celle-ci, une seconde bobine,
- on provoque une variation de flux magnétique dans l'environnement de la première bobine qui est le siège d'un courant alternatif amorti ;
- on détecte la fréquence de la tension alternative induite en retour dans la seconde bobine ;
- on en déduit la position du noyau dans la première bobine ;
- et on en déduit finalement l'état (par exemple ouvert, fermé, ou état intermédiaire) de la vanne.

Avantageusement, pour provoquer la variation précitée de flux magnétique dans l'environnement de la première bobine, on utilise la seconde bobine qui est incluse dans un circuit électrique comportant une source de puissance électrique continue et la variation de flux magnétique est générée par l'ouverture dudit circuit.

On connaît par le document FR-A-2 505 443, qui représente l'état de la technique le plus proche, un procédé et un dispositif permettant de déterminer la position, ouverte ou fermée, d'un organe mobile de vanne de verrouillage. Ce dispositif est constitué de deux enroulements assurant le déplacement de l'organe mobile, l'un d'entre eux étant connecté dans le circuit d'un oscillateur de détection des variations de fréquence en fonction de la position de l'organe mobile, tandis qu'un comparateur de fréquence est relié à un oscillateur de référence et à l'oscillateur de détection. En fonction du résultat de la comparaison, on peut ainsi déterminer la position ou bien ouverte, ou bien fermée de la vanne, sans position intermédiaire. De plus, ce dispositif est adapté exclusivement à des vannes de verrouillage et ne résout pas le problème de la détection de la position de l'organe de fermeture de vannes actionnées par d'autres moyens, manuels ou motorisés. Enfin, selon ce document, l'une des bobines actionneur destinée à déplacer l'organe mobile est directement branchée dans le circuit de l'oscillateur de détection. Contrairement au couplage magnétique, cette particularité ne permet pas de faire des mesures sans un contact électrique qui peut poser des difficultés dans un milieu très exposé à l'humidité et aux salissures.

Ainsi, conformément à l'invention, le recours à des composants électriques à effet électromagnétique permet d'être en mesure d'effectuer la détection depuis l'extérieur de la vanne, sans qu'il soit nécessaire d'avoir accès à l'intérieur de celle-ci. En outre, le recours à des composants en soi inertes évite la présence dans la vanne d'une source d'énergie électrique et confère à l'installation disposée dans la vanne l'autonomie fonctionnelle souhaitable en vue d'une disponibilité élevée de l'installation.

Pour la mise en oeuvre de ce procédé, selon un second aspect, l'invention propose un dispositif de détection selon le préambule de la revendication 3,
caractérisé en ce qu'il comprend
une unité mobile, successivement émettrice et réceptrice, agencée pour être amenée à proximité immédiate de la vanne et comprenant :
a/ une seconde bobine disposable à proximité immédiate et sensiblement coaxialement à la première bobine lors d'une mesure,
b/ des moyens d'excitation aptes à engendrer une variation de flux magnétique dans l'environnement de la première bobine ;
c/ un circuit de mesure connecté aux bornes de la seconde bobine et comportant des moyens de détection de la fréquence d'une tension représentative de la position du noyau de la première bobine, et donc de l'état de la vanne ;
d/ et des moyens de signalisation aptes à signaler l'état détecté de la vanne.

Cette réalisation du dispositif de l'invention sous forme de deux unités structurellement distinctes, mais fonctionnellement aptes à coopérer l'une avec l'autre au moment d'une mesure permet une mise en oeuvre particulièrement simple du procédé précédent. Comme cela a été indiqué plus haut, l'unité émettrice qui est associée en permanence à la vanne est inerte et totalement autonome, tandis qu'au contraire l'unité d'excitation et de mesure, externe à la vanne et distincte de celle-ci, est équipée de tous les moyens appropriés à provoquer les phénomènes électromagnétiques et électriques aptes à conduire à la fourniture de l'information recherchée.

C'est donc tout l'intérêt du dispositif de l'invention que d'être conçu sous forme de deux unités distinctes conçues pour une coopération totale et jouant successivement deux rôles fonctionnels différents avec permutation de ces rôles : l'unité mobile joue tout d'abord un rôle d'émetteur en générant une impulsion énergétique qui est transmise à l'unité fixée dans la vanne laquelle joue alors le rôle de récepteur de cette impulsion énergétique ; puis par une inversion des rôles, l'unité fixée dans la vanne restitue cette impulsion énergétique modifiée en fonction du paramètre variable du circuit oscillant (c'est-à-dire la position du noyau au sein de la bobine) en jouant alors le rôle d'émetteur, cette impulsion modifiée étant détectée par l'unité mobile qui joue alors à son tour le rôle de récepteur. Autrement dit, l'unité à circuit oscillant fixée dans la vanne joue le rôle de miroir électrique déformant, l'analyse de la déformation fournissant l'information recherchée.

De façon avantageuse, les moyens d'excitation comprennent un circuit électrique d'excitation constitué par, en série, une bobine d'excitation, une source d'énergie électrique continue et un interrupteur; dans ce cas, de préférence la bobine d'excitation et la bobine de mesure sont une seule et même bobine (seconde bobine) incluse successivement dans le circuit d'excitation, puis dans le circuit de mesure, ce qui conduit à un circuit plus simple, moins coûteux et moins volumineux ; toujours dans ce cas, et pour les mêmes raisons, il est souhaitable que l'interrupteur du circuit d'excitation soit agencé sous forme d'un commutateur reliant une des bornes de la seconde bobine sélectivement au circuit d'excitation ou au circuit de mesure.

De préférence, l'unité fixe et l'unité mobile présentent respectivement des surfaces mutuellement coopérantes formant des portées de positionnement telles que, lorsque l'unité mobile est approchée de l'unité fixe, les deux bobines respectives soient positionnées mutuellement de façon sensiblement coaxiale et à une distance prédéterminée l'une de l'autre. Pour obtenir un positionnement plus facile des pièces coopérantes, les portées mutuellement coopérantes forment des volumes d'accouplement respectivement mâle et femelle. Dans un mode de réalisation particulier, il est alors prévu que la vanne possède une partie saillante constituant le volume mâle précité et abritant au moins la première bobine, et la seconde bobine est logée en arrière de la surface de fond d'un évidement constituant le volume femelle précité et prévu dans un chapeau de positionnement, ledit évidement ayant une configuration telle qu'elle autorise un positionnement sur la tige de manoeuvre de la vanne sans pour autant en permettre la manoeuvre. Préférentiellement, la partie saillante est sensiblement en forme de tronc de pyramide de section carrée et constitue la tête de manoeuvre de l'organe obturateur de la vanne, et le chapeau de positionnement est en forme de tronc de cône. On peut également envisager un chapeau de positionnement ayant un évidement qui ait une configuration complémentaire de celle de la partie saillante de la vanne, permettant ainsi, s'il est en un matériau suffisamment résistant, de manoeuvrer la vanne après lecture sans changer d'outil. Dans un exemple de réalisation particulièrement bien adapté aux conditions d'utilisation envisagées, l'unité mobile est constituée sous forme d'une canne incorporant tous les composants et dont une extrémité libre porte le chapeau de positionnement précité.

L'invention sera mieux comprise à la lecture de la description qui suit d'un mode de réalisation préféré donné uniquement à titre d'exemple non limitatif. Dans cette description on se réfère aux dessins annexés sur lesquels :
- la figure 1 est une vue schématique des circuits électriques présents dans un dispositif conforme à l'invention ;
- la figure 2 est une vue générale très schématique d'un dispositif de détection de l'état d'une vanne agencée conformément à l'invention ;
- la figure 3 est une vue en coupe d'une partie du dispositif de la fig. 2; et
- la figure 4 est une vue de dessus d'un organe visible en coupe à la figure 3.

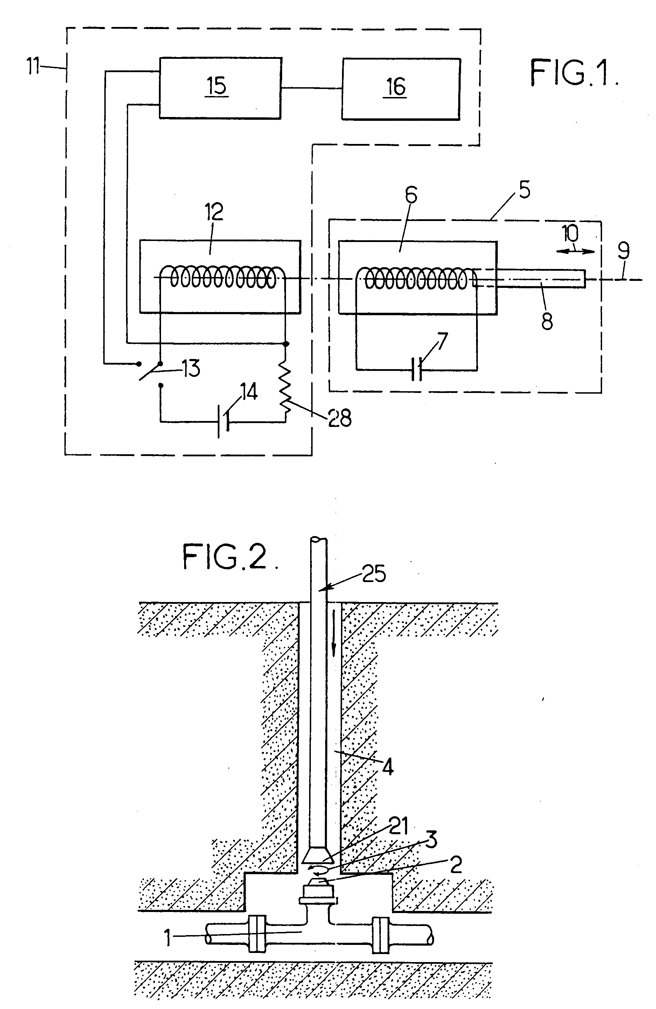

A la figure 2 est représentée une vanne 1 qui est équipée d'une tête de manoeuvre 2 saillant extérieurement et mobile en rotation (double flèche 3) permettant, par actionnement à l'aide d'un outil d'entraînement (non représenté), de déplacer un organe obturateur interne (non visible) dans une position souhaitée (ouvert, fermé, éventuellement position intermédiaire de réglage de débit). Cette vanne 1 est disposée au fond d'un puits 4, de sorte qu'un opérateur ne peut pas observer la position angulaire occupée par la tête 2, ni palper manuellement celui-ci, et par conséquent ne peut pas déterminer l'état de la vanne.

A la figure 1 est représenté le schéma électrique des moyens mis en oeuvre conformément à l'invention pour détecter à distance l'état de cette vanne.

A l'intérieur de la vanne est disposée à demeure une unité fixe 5 constituée par une bobine électrique 6 aux bornes de laquelle est connecté en parallèle un condensateur 7. La bobine 6 est munie d'un noyau 8 qui est mobile linéairement selon son axe et qui est accouplé mécaniquement (ligne en tirets 9) à l'organe obturateur de la vanne ou aux moyens d'actionnement de celui-ci de manière telle que le déplacement de l'organe obturateur ou de ses moyens d'entraînement provoque un déplacement linéaire (double flèche 10) proportionnel du noyau 8. La bobine 6 et le condensateur 7 constituent un circuit électrique oscillant parallèle dont la fréquence de résonance varie avec l'enfoncement du noyau 8, autrement dit varie avec la position de l'organe obturateur de la vanne.

On prévoit par ailleurs une unité mobile 11 qui est physiquement indépendante de l'unité fixe 5. L'unité mobile 11 comprend elle aussi une bobine 12 dont les bornes sont connectées, par l'intermédiaire d'un organe interrupteur 13, aux bornes d'une source d'énergie électrique continue 14 (pile ou batterie). Une résistance 28 est interposée entre la source d'énergie 14 et la bobine 12, ceci pour éviter que l'unité mobile 11 ne constitue un circuit oscillant.

L'unité mobile comprend également des moyens de mesure de fréquence ou fréquencemètre 15 dont les bornes d'entrée sont susceptibles d'être connectées aux bornes de la bobine 12. L'information détectée par le fréquencemètre est affichée par des moyens d'affichage 16.

Le fonctionnement du dispositif est le suivant.

L'unité mobile 11 est amenée à proximité de l'unité fixe 5 (on indiquera plus loin une manière de procéder) de manière telle que les deux bobines 6 et 12 soient sensiblement coaxiales.

L'organe interrupteur 13, initialement en position fermée, est ouvert. La rupture du circuit électrique dans lequel est incluse la bobine 12 engendre une variation de son flux magnétique. Cette variation, captée par la bobine 6, provoque dans celle-ci l'apparition d'un courant sinusoïdal amorti qui circule dans le circuit oscillant.

En raison de la circulation de ce courant, la bobine 6 engendre à son tour un flux magnétique qui induit dans la bobine 12 une tension alternative dont la fréquence est fonction de l'enfoncement du noyau 8 dans la bobine 6, et donc fonction de la position de l'organe obturateur de la vanne.

Il suffit alors de connecter le fréquencemètre 15 aux bornes de la bobine 12 pour obtenir l'information recherchée qui peut être affichée directement, avec un étalonnage approprié, par les moyens d'affichage 16.

Au cours de ce processus de mesure, la bobine 12 joue tout d'abord le rôle d'un émetteur de signal magnétique, tandis que la bobine 6 joue le rôle de récepteur. Puis la bobine 6 joue à son tour le rôle d'émetteur tandis que la bobine 12 est alors récepteur.

Le décalage dans le temps des deux rôles joués par la bobine 12, à laquelle sont associés respectivement deux circuits électriques distincts (d'abord un circuit d'excitation, puis un circuit de mesure), conduit à réaliser l'organe interrupteur 13 sous forme d'un inverseur qui commute la bobine 12 successivement de l'un à l'autre circuit.

Les figures 2 à 4 représentent un exemple de réalisation pratique de la partie mécanique du dispositif conforme à l'invention.

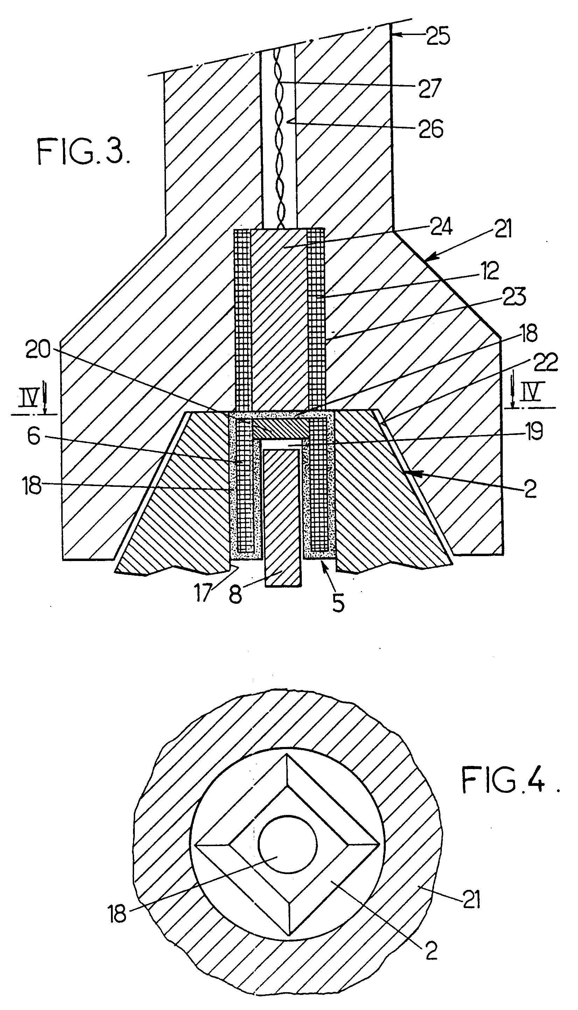

La tête de manoeuvre 2 de l'organe obturateur de la vanne 1 est tournée vers le regard 4 et est extérieurement conformée en tronc de pyramide de section sensiblement carrée (voir fig. 4).

Cette tête en fonte est percée axialement en 17 (fig. 3) et abrite la bobine 6 disposée coaxialement dans le sens vertical, en étant noyée dans un remplissage en résine électriquement isolante 18. Ce remplissage est lui-même tubulaire de manière à dégager un canal central libre 19 dans lequel peut coulisser axialement, librement, le noyau 8 réalisé en ferrite.

A son extrémité supérieure, la bobine 6 a son ouverture centrale obturée par une pièce en ferrite 20 destinée à canaliser les lignes du champ magnétique. Une couche de résine obture le perçage 17 et isole électriquement la bobine 6 et la pièce en ferrite 20 vis-à-vis de l'extérieur.

La tête de manoeuvre 2 est apte, au cours d'un processus de mesure, à être coiffée par un chapeau de positionnement 21 (appartenant à un appareil de mesure qui sera décrit plus loin de façon plus complète) muni à sa partie inférieure d'un évidement 22 en forme de tronc de cône ou de tronc de pyramide complémentaire de la tête de manoeuvre 2. Dans la face de fond de l'évidement 22 est foré un logement axial 23, sensiblement cylindrique de révolution, dans lequel est logée la bobine 12 disposée axialement ; dans la partie interne de la bobine 12 est disposé un noyau 24. L'ensemble peut être noyé dans un remplissage de résine isolante (non représenté) pour son maintien en place et sa fixation. Dans l'exemple de réalisation représenté à la fig. 3, l'extrémité inférieure de la bobine 12 et la face inférieure du noyau 24 affleurent la face de fond de l'évidement 22.

On remarquera que les agencements, les conformations et les dimensionnements respectifs de la tête de manoeuvre 2 et du chapeau 21 sont tels que, en position de coopération mutuelle telle que représentée à la fig. 3, les deux bobines 6 et 12 ont sensiblement le même diamètre et sont disposées l'une à la suite de l'autre de façon coaxiale en étant couplée magnétiquement, ce couplage étant favorisé par la pièce en ferrite 20. Les faces d'appui en contact de la tête de manoeuvre 2 et du chapeau 21, respectivement, sont rectifiées de manière que leur coopération mutuelle correcte conduise à une coaxialité de la tête et du chapeau, et donc des deux bobines 6 et 12.

En se reportant maintenant également à la fig. 2 le chapeau de positionnement 21 est disposé axialement à une extrémité d'un appareil de mesure 25 conformé en bâton ou en canne ayant une longueur supérieure à la profondeur du regard 4. Cette canne de mesure est agencée pour renfermer l'ensemble de l'unité mobile 11, c'est-à-dire outre la bobine 12, également la source d'énergie électrique 14, l'inverseur 13 et les moyens de détection de fréquence 15 et d'affichage 16. Un canal central axial 26 s'étendant sur la longueur de la canne permet de loger les fils électriques de liaison 27 raccordant la bobine 12 aux autres composants.

Bien entendu, au moins les moyens d'affichage 16 et l'inverseur 13, qui doivent être situés à portée de main et d'oeil de l'opérateur, sont disposés à l'extrémité supérieure de la canne (ou extrémité opposée au chapeau 21).

Eventuellement, la canne 25 peut également incorporer d'autres moyens, tels que des moyens d'enregistrement des contrôles effectués et/ou des moyens de connexion destinés au raccordement avec des appareils externes (appareils de contrôle, d'enregistrement, etc.).

Dans un exemple typique de réalisation, la bobine 12 a une longueur de 17 mm, un diamètre de 10 mm et est constituée d'environ 100 spires d'un fil isolé de 0,3 mm de diamètre; la bobine 6 a une longueur de 10 mm, un diamètre de 10 mm et est constituée d'environ 100 spires du même fil ; le condensateur 7 a une valeur de 1,5 µF ; la source d'énergie électrique fournit une tension continue de 4,5 volts.

L'expérience a permis de relever une fréquence de 17,05 kHz lorsque le noyau 8 était entièrement sorti, une fréquence de 13,37 kHz pour un enfoncement à mi-longueur du noyau, et une fréquence de 8 kHz pour un enfoncement complet du noyau dans la bobine 6.

Les avantages présentés par l'invention sont les suivants :
- l'unité émettrice est liée en permanence à la tête de manoeuvre de la vanne ;
- l'unité émettrice est inerte ;
- la mesure s'effectue sans contact électrique ni mécanique ;
- la mesure s'effectue par proximité. Ainsi la présence de poussières et débits de toute sorte entre l'unité émettrice et l'unité réceptrice n'influe pas la mesure; elle peut être faite pour une distance entre les deux unités de 0 à 15 mm.

## Revendications

1. Procédé pour détecter l'état (par exemple ouvert, fermé, ou état intermédiaire) d'une vanne (1), notamment située hors de vue et/ou de toucher d'un opérateur, cette vanne incorporant une bobine électrique (6) à noyau mobile (8) déplaçable linéairement en correspondance avec le déplacement de l'organe obturateur de la vanne, défini en ce que l'on associe à la vanne, à demeure dans celle-ci ou au voisinage de celle-ci, un circuit électrique oscillant incluant la susdite bobine (6) et dont la fréquence d'oscillation est dépendante de la position du noyau (8) dans la bobine, caractérisé en ce que :
- au moment de la détection, on approche de la bobine précitée (6), sensiblement coaxialement à celle-ci, une seconde bobine (12),
- on provoque une variation de flux magnétique dans l'environnement de la première bobine (6) qui est le siège d'un courant alternatif amorti :
- on détecte la fréquence de la tension alternative induite en retour dans la seconde bobine (12) ;
- on en déduit la position du noyau (8) dans la première bobine (6) ;
- et on en déduit finalement l'état (par exemple ouvert, fermé, ou état intermédiaire) de la vanne (1).

2. Procédé selon la revendication 1, caractérisé en ce que, pour provoquer la variation précitée de flux magnétique dans l'environnement de la première bobine (6), on utilise la seconde bobine (12) qui est incluse dans un circuit électrique comportant une source de puissance électrique continue (14) et en ce que la variation de flux magnétique est générée par l'ouverture dudit circuit.

3. Dispositif pour la détection de l'état (par exemple ouvert, fermé, ou état intermédiaire) d'une vanne (1) située hors de vue et/ou de toucher d'un opérateur, la vanne étant équipée d'une bobine électrique (6) à noyau mobile (8) déplaçable linéairement en correspondance avec le déplacement de l'organe obturateur de la vanne, ce dispositif comprenant une unité fixe (5) successivement réceptrice et émettrice, associée à la vanne (1) de façon permanente, et comprenant un circuit électrique oscillant incluant la bobine (6) précitée et dont la fréquence d'oscillation est dépendante de la position du noyau (8) dans la bobine,
caractérisé en ce qu'il comprend aussi une unité mobile (11), successivement respectivement émettrice et réceptrice, agencée pour être amenée à proximité immédiate de la vanne et comprenant :
a/ une seconde bobine (12) disposable à proximite immédiate et sensiblement coaxialement à la première bobine (6) lors d'une mesure,
b/ des moyens d'excitation (12, 13, 14) aptes à engendrer une variation de flux magnétique dans l'environnement de la première bobine (6) ;
c/ un circuit de mesure connecté aux bornes de la seconde bobine (12) et comportant des moyens (15) de détection de la fréquence d'une tension représentative de la position du noyau (8) de la première bobine (6), et donc de l'état de la vanne (1) ;
d/ et des moyens (16) de signalisation aptes à signaler l'état détecté de la vanne (1).

4. Dispositif selon la revendication 3, caractérisé en ce que les moyens d'excitation comprennent un circuit électrique d'excitation constitué par, en série, une bobine d'excitation (12), une résistance (28), une source d'énergie électrique continue (14) et un interrupteur (13).

5. Dispositif selon la revendication 4, caractérisé en ce que la bobine d'excitation et la bobine de mesure sont une seule et même bobine ou seconde bobine (12) incluse successivement dans le circuit d'excitation, puis dans le circuit de mesure.

6. Dispositif selon la revendication 5, caractérisé en ce que l'interrupteur (13) du circuit d'excitation est agencé sous forme d'un commutateur reliant une des bornes de la seconde bobine (12) sélectivement au circuit d'excitation ou au circuit de mesure.

7. Dispositif selon l'une quelconque des revendications 3 à 6, caractérisé en ce que l'ouverture centrale de la bobine (6) est obturée par une pièce de ferrite (20).

8. Dispositif selon l'une quelconque des revendications 3 à 7, caractérisé en ce que l'unité fixe (5) et l'unité mobile (11) présentent respectivement des surfaces mutuellement coopérantes formant des portées de positionnement telles que, lorsque l'unité mobile (5) est approchée de l'unité fixe (11), les deux bobines (6, 12) respectives soient positionnées mutuellement de façon sensiblement coaxiale et à une distance prédéterminée l'une de l'autre.

9. Dispositif selon la revendication 8, caractérisé en ce que les portées mutuellement coopérantes forment des volumes d'accouplement respectivement mâle et femelle.

10. Dispositif selon la revendication 9, caractérisé en ce que la vanne possède une partie saillante (2) abritant au moins la première bobine (6) et en ce que la seconde bobine (12) est logée en arrière de la surface de fond d'un évidement (22) prévu dans un chapeau de positionnement (21).

11. Dispositif selon la revendication 10, caractérisé en ce que la partie saillante (2) est sensiblement en forme de tronc de pyramide de section carrée et constitue la tête de manoeuvre de l'organe obturateur de la vanne (1).

12. Dispositif selon la revendication 10 ou 11, caractérisé en ce que l'unité mobile (11) est constituée sous forme d'une canne (25) incorporant tous les composants et dont l'extrémité libre porte le chapeau de positionnement (21) précité.

## Claims

1. Method for detecting the state (for example open, closed or intermediate state) of a valve (1), notably one situated out of sight and/or reach of an operator, this valve incorporating an electrical coil (6) with a moving core (8) which can be moved linearly in accordance with the movement of the valve obturator, defined in that an electrical oscillator circuit including the above-mentioned coil (6) and the oscillation frequency of which is dependent on the position of the core (8) in the coil, is associated with the valve, permanently in the latter or in the vicinity of it, characterised in that:
- at the time of detection, a second coil (12) is brought close to the aforesaid coil (6) approximately coaxially with it,
- a variation in magnetic flux is brought about in the area around the first coil (6), which is the seat of a damped alternating current;
- the frequency of the alternating voltage induced in return in the second coil (12) is detected;
- the position of the core (8) in the first coil (6) is derived from this; and
- finally the state (for example open, closed or intermediate state) of the valve (1) is derived from this.

2. Method according to claim 1, characterised in that, in order to bring about the aforesaid variation in magnetic flux in the area around the first coil (6), the second coil (12) is used, which is included in an electrical circuit having a source of DC electrical power (14), and in that the variation in magnetic flux is generated by the opening of the said circuit.

3. Device for detecting the state (for example open, closed or intermediate state) of a valve (1), notably one situated out of sight and/or reach of an operator, the valve being equipped with an electrical coil (6) with a moving core (8) which can be moved linearly in accordance with the movement of the valve obturator, this device comprising a fixed unit (5) which is successively receiving and transmitting, associated permanently with the valve (1), and comprising an electrical oscillator circuit including the aforesaid coil (6) and the oscillation frequency of which is dependent on the position of the core (8) in the coil,
characterised in that it also comprises a moving unit (11), which is successively transmitting and receiving respectively, arranged so as to be brought into the immediate vicinity of the valve and comprising:
a) a second coil (12) which can be disposed in the immediate vicinity of and substantially coaxially with the first coil (6) during a measurement,
b) excitation means (12, 13, 14) suitable for generating a variation in magnetic flux in the area around the first coil (6);
c) a measurement circuit connected to the terminals of the second coil (12) and including means (15) for detecting the frequency of a voltage representing the position of the core (8) of the first coil (6), and therefore the state of the valve (1); and
d) indicator means (16) suitable for indicating the detected state of the valve (1).

4. Device according to Claim 3, characterised in that the excitation means comprise an electrical excitation circuit formed, in series, by an excitation coil (12), a resistor (28), a source of DC electrical power (14) and a switch (13).

5. Device according to Claim 4, characterised in that the excitation coil and the measurement coil are one and the same coil or a second coil (12) included successively in the excitation circuit, and then in the measurement circuit.

6. Device according to Claim 5, characterised in that the switch (13) for the excitation circuit is arranged in the form of a changeover switch connecting one of the terminals of the second coil (12) selectively to the excitation circuit or to the measurement circuit.

7. Device according to any one of Claims 3 to 6, characterised in that the central opening in the coil (6) is closed off by a ferrite piece (20).

8. Device according to any one of Claims 3 to 7, characterised in that the fixed unit (5) and the moving unit (11) have respectively mutually cooperating surfaces forming positioning surfaces such that, when the moving unit (5) is brought close to the fixed unit (11), the two respective coils (6, 12) are mutually positioned substantially coaxially and at a predetermined distance from each other.

9. Device according to Claim 8, characterized in that the mutually cooperating surfaces form respectively male and female coupling volumes.

10. Device according to Claim 9, characterised in that the valve has a projecting part (2) protecting at least the first coil (6) and in that the second coil (12) is housed behind the end surface of a recess (22) provided in a positioning cap (21).

11. Device according to Claim 10, characterised in that the projecting part (2) is substantially in the form of a truncated pyramid of square cross section and constitutes the head for manoeuvring the obturator for the valve (1).

12. Device according to Claim 10 or 11, characterised in that the moving unit (11) is made in the form of a tube (25) incorporating all the components and the free end of which carries the aforesaid positioning cap (21).

## Patentansprüche

1. Verfahren zur Erfassung des Stands (beispielsweise geöffneten, geschlossenen oder eines Zwischenstands) eines Ventils (1), das insbesondere außerhalb der Sicht- und/oder Reichweite einer Bedienungsperson liegt, wobei dieses Ventil eine Magnetspule (6) mit einem beweglichen Kern (8) einschließt, der linear entsprechend der Verschiebung des Absperrorgans des Ventils (1) versshiebbar ist, das dadurch definiert ist, daß man an das Ventil, entweder dauerhaft in diesem oder in dessen Nähe, einen Schwingkreis anschließt, der die obengenannte Spule (6) einschließt und dessen Oszillationsfrequenz von der Position des Kerns (8) in der Spule abhängt, dadurch gekennzeichnet, daß:
- man der vorgenannten Spule (6) im Augenblick der Erfassung in etwa koaxial eine zweite Spule (12) annähert,
- man eine Veränderung des Magnetflusses in der Umgebung der ersten Spule (6) hervorruft, in der gedämpfter Wechselstrom herrscht,
- man die Frequenz der dafür in der zweiten Spule (12) induzierten Wechselspannung erfaßt,
- man daraus den Stand des Kerns (8) in der ersten Spule (6) ableitet,
- und daraus schließlich den Stand (beispielsweise offenen, geschlossenen oder Zwischenstand) des Ventils (1) ableitet.

2. Verfahren nach Anspruch 1, dadurch gekennzeichnet, daß man, um den Magnetfluß in der Umgebung der ersten Spule (6) wie vorgenannt zu verändern, die zweite Spule (12) benutzt, die in einen Stromkreis eingebunden ist, der eine Gleichstromquelle (14) umfaßt, und daß die Veränderung des Magnetflusses durch Öffnen dieses Kreises erzeugt wird.

3. Vorrichtung zur Erfassung des Stands (beispielsweise geöffneten, geschlossenen oder eines Zwischenstands) eines Ventils (1), das außerhalb der Sicht- und/oder Reichweite einer Bedienungsperson liegt, wobei dieses Ventil eine Magnetspule (6) mit einem beweglichen Kern (8) aufweist, der linear entsprechend der Verschiebung des Absperrorgans des Ventils verschiebbar ist, wobei diese Vorrichtung eine feste Einheit (5) umfaßt, die nacheinander Emitter und Empfänger und mit dem Ventil (1) dauerhaft verbunden ist und einen Schwingkreis umfaßt, der die vorgenannte Spule (6) einschließt, und dessen Oszillationsfrequenz von der Position des Kerns (8) in der Spule abhängt, dadurch gekennzeichnet, daß sie außerdem eine bewegliche Einheit (11) umfaßt, die nacheinander jeweils als Emitter und Empfänger fungiert und so angeordnet ist, daß sie in unmittelbare Nähe des Ventils (1) gebracht werden kann, und umfassend:
a) eine zweite Spule (12), die bei einer Messung in unmittelbarer Nähe und im wesentlichen koaxial zur ersten Spule (6) angeordnet werden kann;
b) Erregervorrichtungen (12, 13, 14), mit denen eine Änderung des Magnetflusses in der Umgebung der ersten Spule (6) bewirkt werden kann;
c) einen Meßkreis, der an die Klemmen der zweiten Spule (12) angeschlossen ist und Vorrichtungen (15) zur Erfassung der Frequenz einer Spannung aufweist, welche die Stellung des Kerns (8) der ersten Spule (6) und somit den Stand des Ventils (1) wiedergibt;
d) und Signalisierungsvorrichtungen (16), die den erfaßten Stand des Ventils (1) signalisieren können.

4. Vorrichtung nach Anspruch 3, dadurch gekennzeichnet, daß die Erregervorrichtungen einen Erregerkreis umfassen, der in Serie aus einer Erregerspule (12), einem Widerstand (28), einer Gleichstromquelle (14) und einem Unterbrecher (13) besteht.

5. Vorrichtung nach Anspruch 4, dadurch gekennzeichnet, daß die Erregerspule und die Meßspule ein und dieselbe oder die zweite Spule (12) sind, die nacheinander erst in den Erregerkreis und dann in den Meßkreis eingebunden wird.

6. Vorrichtung nach Anspruch 5, dadurch gekennzeichnet, daß der Unterbrecher (13) des Erregerkreises in Form eines Schalters vorgesehen ist, der eine der Klemmen der zweiten Spule (12) selektiv an den Erregerkreis oder den Meßkreis anschließt.

7. Vorrichtung nach einem der Ansprüche 3 bis 6, dadurch gekennzeichnet, daß die zentrale Öffnung der Spule (6) durch ein Ferritstück (20) verschlossen ist.

8. Vorrichtung nach einem der Ansprüche 3 bis 7, dadurch gekennzeichnet, daß die feste Einheit (5) und die bewegliche Einheit (11) jeweils zueinander passende Flächen aufweisen, die Positionierungsauflageflächen bilden, die bewirken, daß die beiden Spulen 6 und 12, wenn die bewegliche Einheit (11) der festen Einheit (5) angenähert wird, im wesentlichen koaxial zueinander und in einem bestimmten Abstand voneinander positioniert sind.

9. Vorrichtung nach Anspruch 8, dadurch gekennzeichnet, daß die zueinander passenden Auflageflächen jeweils Ankoppelungsräume aus Buchse und Stecker bilden.

10. Vorrichtung nach Anspruch 9, dadurch gekennzeichnet, daß das Ventil einen hervorspringenden Bereich (2) aufweist, in dem sich mindestens die erste Spule (6) befindet, und daß sich die zweite Spule (12) hinter der Bodenfläche einer in einer Positionierungshaube (21) vorgesehenen Vertiefung (22) befindet.

11. Vorrichtung nach Anspruch 10, dadurch gekennzeichnet, daß der hervorstehende Teil (2) im wesentlichen die Form eines Pyramidenstumpfs mit quadratischem Querschnitt hat und den Bedienungskopf des Absperrorgans des Ventils (1) bildet.

12. Vorrichtung nach Anspruch 10 oder 11, dadurch gekennzeichnet, daß die bewegliche Einheit (11) in Form einer Röhre (25) ausgeführt ist, in der alle Komponenten untergebracht sind und deren freies Ende die vorgenannte Positionierungshaube (21) trägt.
